(19) Europäisches Patentamt / European Patent Office / Office européen des brevets

(11) **EP 2 701 314 B1**

(12) **EUROPEAN PATENT SPECIFICATION**

(45) Date of publication and mention
of the grant of the patent:
**14.12.2016 Bulletin 2016/50**

(51) Int Cl.:
*G06K 7/10* (2006.01)     *H04B 5/00* (2006.01)

(21) Application number: **12306018.8**

(22) Date of filing: **23.08.2012**

(54) **Detection of load-modulated NFC signals**

Detektion von NFC lastmodulierten Signalen

Détection de signaux NFC à modulation de charge

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**26.02.2014 Bulletin 2014/09**

(73) Proprietor: **ST-Ericsson SA
1228 Plan-les-Ouates (CH)**

(72) Inventor: **Dhayni, Achraf
06220 Vallauris (FR)**

(74) Representative: **Grünecker Patent- und
Rechtsanwälte
PartG mbB
Leopoldstraße 4
80802 München (DE)**

(56) References cited:
**WO-A1-2010/108022    US-A1- 2008 136 639
US-A1- 2010 013 604**

Printed by Jouve, 75001 PARIS (FR)

**Description**

<u>TECHNICAL FIELD</u>

The invention relates to the field of electronics, and more particularly to an electronic device adapted for NFC (i.e. Near Field Communication), a system comprising said device, and a method for using said system.

<u>BACKGROUND</u>

NFC systems are expected to be integrated in next generation mobile phones. Typical NFC is a short range radio technology based on the inductive coupling of two loop antennae resonating at 13.56 MHz. Typical data rates are in the range of 106 to 424 Kbps, and communication distance is in the range of several centimeters. Typical applications include secure transactions for payment and ticketing.

Tag identification is an important measure in NFC systems. An NFC reader (sometimes also called NFC "initiator") recognizes RFID tags or NFC tag emulators, (both sometimes called "targets" or "transponders" as well, and all referred to as "tags" in the following) through communication over a shared wireless channel. In the case of multiple nearby devices, e.g. when multiple readers transmit signals and/or when multiple tags transmit their IDs simultaneously, the signals collide and this collision disturbs a reader's identification process. Collision problems can be divided into reader collision (i.e. presence of several readers) and tag collision (i.e. presence of several tags).

Communication between an NFC reader and a tag can be performed under a passive communication mode or an active communication mode. In the passive communication mode, the reader device provides a carrier field and the tag device answers by modulating (by load-modulation) the existing field. In this mode, the tag device may draw its operating power from the initiator-provided magnetic field, thus making the target device a transponder. In the active communication mode, both the reader and the tag devices communicate by alternately generating their own fields. A device deactivates its RF (Radio Frequency) field while it is waiting for data. In this mode, both devices typically have power supplies.

In all communication modes (active and passive), reader collision is efficiently solved by the presence of a "field detector" block in the reader's circuit. In the active communication mode, tag collision is efficiently solved in a similar way as reader collision (a field detector in the tag circuit). However still most of the applications involve tag collision issues in the passive communication mode.

In all NFC standards, collision avoidance is specified for NFC. As mentioned above, reader devices generating RF fields do initial collision avoidance by sensing the carrier for already existing RF fields (from other readers). If another RF field stronger or equal to a predetermined threshold is detected, the RF field is not switched on. If no other RF field is detected, the RF field is switched on. The reader then waits an initial RF guard-time e.g. higher than 5ms before starting to transmit a request. This ensures reader anti-collision.

A similar collision avoidance procedure called "response RF collision avoidance" is performed in active communication mode where the tag replies to a reader's request generating its own RF field. The target waits during what is known as the "active delay time" during which it senses the carrier to ensure that the other tag is responding. If no RF field is detected, the target switches on its RF field and waits another active guard time higher than 1024 periods of carrier frequency before transmitting its response.

In the passive communication mode, the operation of existing NFC systems often involves a situation in which numerous tags are present in the operating volume of a single reader at the same time. In such a system (consisting of a "control station" which is the reader, and a number of "participants" which are tags), one can differentiate between two phases of communication. The first phase is used to transmit data from a reader to the tags. The transmitted data stream is received by all tags simultaneously. This is comparable with the simultaneous reception by hundreds of radio receivers of a news program transmitted by a radio station. This type of communication is therefore known as "broadcast".

The second phase of communication involves the transmission of data from many individual tags, in the reader's operating volume, to the reader. This form of communication is called "multi-access". During this phase, not more than one tag must respond to the reader simultaneously. Responding to the reader occurs when a tag starts load-modulating the 13.56MHz field sent out by the reader. In the wrong case where more than one tag responds, load-modulations caused by different tags will collide and destruct each other. For this reason anti-collision (or collision avoidance) protocols were developed to solve this issue.

The various types of anti-collision methods for multi-access/tag collision can be reduced to two basic types: the probabilistic method and the deterministic method.

With the probabilistic method, tags respond, one by one, at randomly generated times. If a collision occurs, colliding tags will have to identify themselves again after waiting a random period of time. This technique suffers from a "tag starvation" problem where not all tags can be identified due to the random nature of chosen time. Also, there could still be collision due the difficulty to simulate perfect randomness.

With the deterministic method, the reader starts by asking for the first numbered tag (e.g. with a Query Tree algorithm) until it matches the tag then it continues to ask for additional characters until all tags within the region are found. This method is slow, because the above protocol takes a certain amount of time, and introduces a long identification delay.

Document US 2010/013604 A1 discloses a method of identifying a plurality of transponders, the method comprising receiving at an interrogator a chain of data transmission blocks from each transponder, wherein the first data transmission block contains a transponder identity and a transmission block number; one or more further data transmission blocks containing additional block data and a respective transmission block number; the block number being changed automatically as each data block is transmitted.

Document WO 2010 108022 A1 discloses a radio frequency identification signal capture device to prevent data transfer between a nearby RFID reader and at least one RFID device including one or more RFID transponders storing data and configured to inductively couple with the RFDD reader to provide data thereto when interrogated therewith.

SUMMARY

The invention aims at improving the field of NFC.

This object is achieved with an electronic device. The electronic device comprises a communication module adapted to receive signals sent by an NFC reader and adapted to send signals addressed to the NFC reader. The electronic device also comprises a detector coupled to the communication module and adapted to detect load-modulated signals among received signals, and to prevent the communication module from sending a signal when the detector detects a load-modulated signal.

This object is also achieved with a mobile communication system comprising the above device.

This object is also achieved with a system comprising a first object that is the above device or the above mobile communication system, a second object that comprises an RFID tag or a passive NFC tag emulator, and an NFC reader.

This object is also achieved with a method for using the above system. The method comprises approaching the second object to the NFC reader. The method also comprises performing NFC between the NFC reader and the second object, including sending a carrier field from the NFC reader to the second object and load-modulating the carrier field by the second object. While performing NFC, the method comprises approaching the first object to the NFC reader, detecting at the first object load-modulated signals sent by the second object, and preventing the communication module of the first object from sending a signal.

The invention offers many advantages, including the following:

- Thanks to the communication module, the electronic device may conveniently be used for performing NFC.
- Because the detector is adapted to detect load-modulated signals, the electronic device may, when it is placed in the operating volume of an NFC reader, detect the presence of other tags in the operating zone of an NFC reader, including tags which are performing passive communication.
- The fact that the electronic device performs such detection allows robustness of the avoidance of tag collision, e.g. compared to probabilistic methods where tags answer at pseudo-random times.
- The fact that the detection is performed at the tag's level, and by a detector, thus by a piece of hardware, makes the method fast, e.g. compared to deterministic methods where the reader tries to identify all tags present in its operating volume one by one.

Further features and advantages of the invention will appear from the following description of embodiments of the invention, given as non-limiting examples, with reference to the accompanying drawings listed hereunder.

BRIEF DESCRIPTION OF THE DRAWINGS

FIG.1 shows a schematic representation of an example of a mobile communication device comprising the electronic device,
FIG.2 shows a flowchart of an example of the method,
FIG.3-6 show examples of modulated signals, and
FIG.7 shows a schematic representation of an example of the electronic device.

DETAILED DESCRIPTION

The electronic device, described in details later, may be included in any type of electronic system. Notably, a system suitable for comprising the electronic device may comprise hardware memory, including volatile and/or non-volatile memory. The memory is accessible by at least one processor, e.g. a Central Processing Unit (CPU) of the device. In an example, the system may further comprise audio converters and transducers, such as digital to analog converter (DAC) and a loudspeaker. In such a case, the system is adapted to play a numeric audio signal. The system may further comprise a graphical user interface, such as a sensitive screen or a screen and keyboard.

The system may be a communication system. The system may thus comprise a signal emitter and a signal receiver. For example, the system may be a telephone. The system may be a wireless communication system. The system may be mobile (i.e. transportable). The system may for example be a mobile phone (e.g. a cell phone). Thus, the system is very convenient as it combines the advantages of allowing phone calls and performing other electronic actions, including uses of the electronic device.

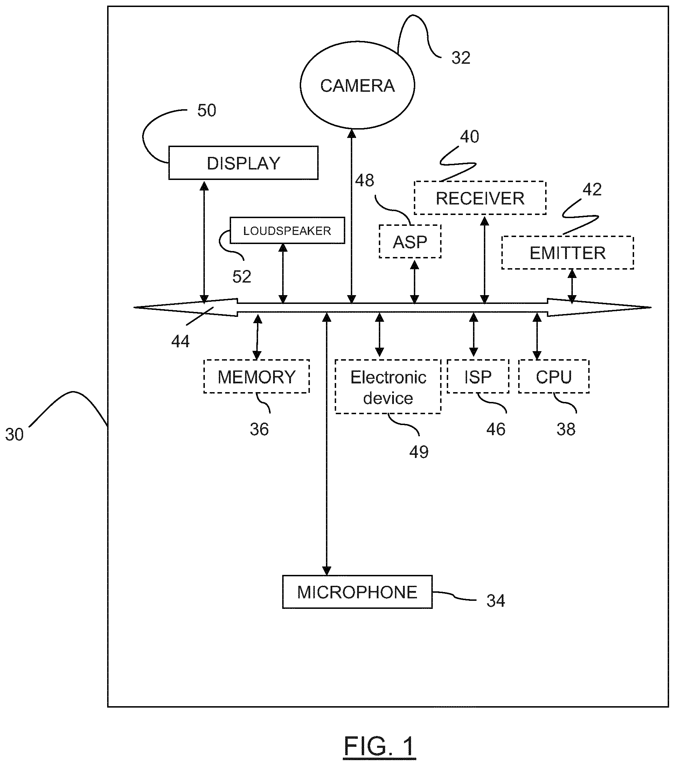

It is referred to FIG. 1 which shows a block diagram representing an example of a mobile electronic system 30, which may be a mobile phone, comprising the electronic device 49.

In the example, system 30 may be used for capturing audio and image data. For this, system 30 comprises camera 32 and microphone 34 for respectively capturing image and audio data. System 30 also comprises memory 36 which may comprise volatile and non-volatile memory (not distinguished on the figure). Memory 36 may be divided in several compartments, possibly physically apart in system 30. Memory 36 stores, recorded thereon, instructions for performing the method, possibly already compiled or pre-compiled. System 30 also comprises processors including CPU 38, Image Signal Processor 46 (ISP) and Audio Signal Processor 48 (ASP). These processors access data through bus 44, process the data and circulate the data through the bus 44. Of course, fewer than three processors may physically be embodied, e.g. if one processor accomplishes all computations. On the other hand, more than three processors may physically be embodied, e.g. in the case of parallel processing. System 30 also comprises display 50 and loudspeaker 52 for outputting data, i.e. for respectively displaying image data and playing audio data. System 30 also comprises receiver 40 and emitter 42, which are for communicating with the exterior e.g. with other systems, e.g. if system 30 is a cellular phone.

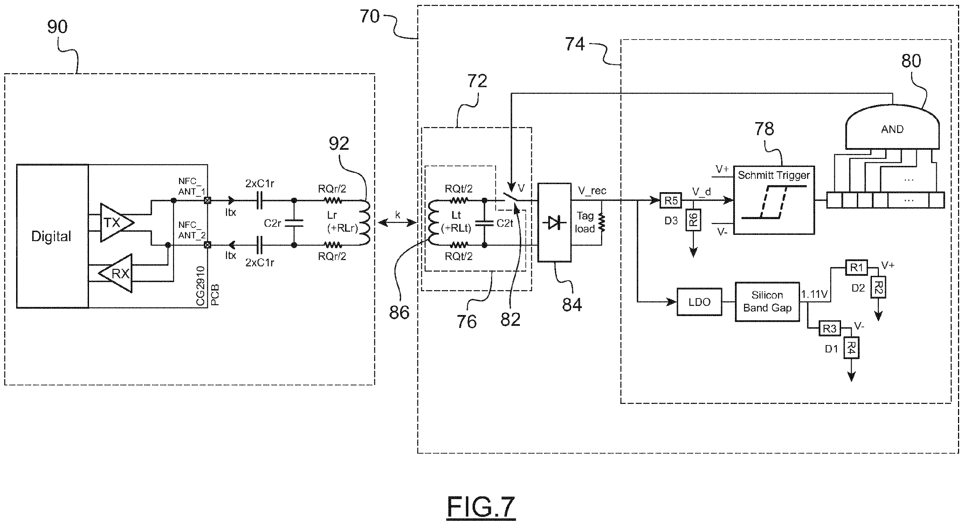

System 30 also comprises the electronic device, which is here designated by reference 49. For example, system 30 may be exposed to an NFC reader (not represented). Upon such exposure, the electronic device 49 may perform certain actions, controlled by its components. Electronic device 49 may be as described below, and as shown on FIG. 7.

Components of the electronic device are now detailed. These components are pieces of hardware and may include pieces of software for performing the actions which the components are adapted to perform, as know *per se.*

The electronic device comprises a communication module. The communication module is an electronic component adapted to receive signals sent by an NFC reader (i.e. load such signals within the electronic device, e.g. by transforming such signals into a numeric signal). The communication module may thus comprise an antenna for transforming the magnetic field typically generated by an NFC reader into a voltage, a regulator for attenuating the voltage, and/or also channels for directing the received signals (converted to voltage) to other components for processing. The electronic device may thus further comprise a processing unit, adapted to process the received signals and output another signal. The communication module is also adapted to send signals, e.g. the signal outputted by the processing unit, and addressed to the NFC reader (i.e. adapted for the NFC reader to read and process the sent signals).

The communication module may be solely used by the electronic device, but a system including the electronic device may also include such a communication module for share. For example, the communication module may be shared by the electronic device and other electronic devices e.g. of similar structure. The system may for example comprise an NFC system which comprises an NFC contactless front end, which is an interface for performing NFC with an NFC reader. The electronic device may be connected to the NFC system through a dedicated interface. The NFC contactless front end may comprise a radio module for receiving and/or emitting an NFC signal. The NFC contactless front end may comprise (or be coupled to) a processing unit, possibly the CPU mentioned earlier. The NFC system may further comprise a processing unit adapted to control the NFC contactless front end and the electronic device comprised in the system. In other words, the processing unit is in communication with the NFC contactless front end, e.g. to receive incoming signals from an NFC reader and channelled by the contactless front end, and with the electronic device, e.g. to make the electronic device perform actions such as data exchange with the NFC reader.

In any case, the communication module may generate its own RF field. In this case (i.e. the active communication mode mentioned above), the electronic device comprises or is physically connected to a power supply unit. In such a case, the communication module sends signals which are amplitude-modulated signals.

Alternatively or additionally, the communication module may be adapted to use a carrier field provided by the NFC reader (which is adapted to always be able to provide such a carrier field) to draw its power and modulate such field to send signals of its own. In this case (i.e. the passive communication mode mentioned above), the electronic device may be free of any power supply unit and thus cheaper and easier to manufacture, or may send signals without making use of such power supply unit if it comprises any. In such a case, the communication module sends signals which are load-modulated signals. For example, the electronic device may be an RFID tag (thus only able to be used in passive communication mode) or a passive NFC tag emulator (i.e. an NFC transponder acting as a passive tag).

Thus, the electronic device may also be referred to as "tag" in the following.

The communication module thus allows the electronic device to perform NFC with an NFC reader. Notably, the electronic device may have an identifier and the communication with the NFC reader may consist of identifying the electronic device by the NFC reader. For example, the NFC reader may be adapted to send an identification request signal to the electronic device. The electronic device may receive such signal via the communication module. The electronic device may then, in response, send a signal containing its identifier, and addressed to the NFC reader.

NFC, short for Near Field Communication, is a short range wireless RFID technology that makes use of interacting electromagnetic radio fields instead of the typical direct radio transmissions used by technologies such as Bluetooth. NFC is directed to applications where a physical touch, or close to it (inferior to 5cm between the antenna of the tag and the antenna of the NFC reader), is required in order to maintain security. NFC is planned for use in mobile phones for, among other things, payment, data transfer, or identification. NFC operates at 13.56 MHz and supports the existing ISO/IEC standards 14443 (Types A/B/Felica) and 15693 (tags). An NFC device can work in two modes: active (battery powered) and passive (radio energy powered). There are three main ways/modes to use NFC. Key benefits of NFC include compatibility with the existing contactless infrastructure (RFID), and simplicity. NFC is characterized by a natural and intuitive "just touch" movement. Using NFC may imply that the communication, the reader, and/or the tag implement the following standard: EMVCo, NFC Forum, ISO14443.

For example, the electronic device may be a secure element. As known per se, secure elements are pieces of hardware connectable to a system and holding data (e.g. on a memory) which may be communicated via NFC in a secure way (e.g. respecting any standard security requirement). A secure element may comprise a processor and a memory, as well as an application, i.e. a piece of software running inside the secure element, the application being accessible by the NFC reader via NFC in a secure way. Typical secure elements are SIM cards and SD cards. The interfaces comprise a hardware part and a software part, which may be as known in the art, e.g. according to the ETSI 102613 and/or ETSI 102622 standards.

The exact nature of the communication and the exact constitution of the NFC reader are however not further detailed, as they depend on the foreseen application, as known from the field of NFC.

Further to the communication module, the electronic device comprises a detector, which comprises hardware as detailed in the examples provided later, and which is coupled to (i.e. in communication with) the communication module. The detector is adapted to detect load-modulated signals among signals that are received by the communication module. The detector is further adapted to prevent the communication module from sending a signal when the detector detects a load-modulated signal.

In other words, thanks to the detector, when a load-modulated signal is detected, the communication module is put into a state (by modifications of the electronic device's hardware and/or software) where it cannot send signals. Yet in other words, the electronic device is put from an activated state to a deactivated state. Thus, when approaching a NFC reader, the electronic device is efficiently and robustly able to avoid collision with another electronic device already performing NFC with the NFC reader in a passive communication mode, by detecting the load-modulated signals sent by the other electronic device during the NFC. Later on, the electronic device can be put back into the activated state, e.g. after a predetermined period of time during which the detector has not performed any detection.

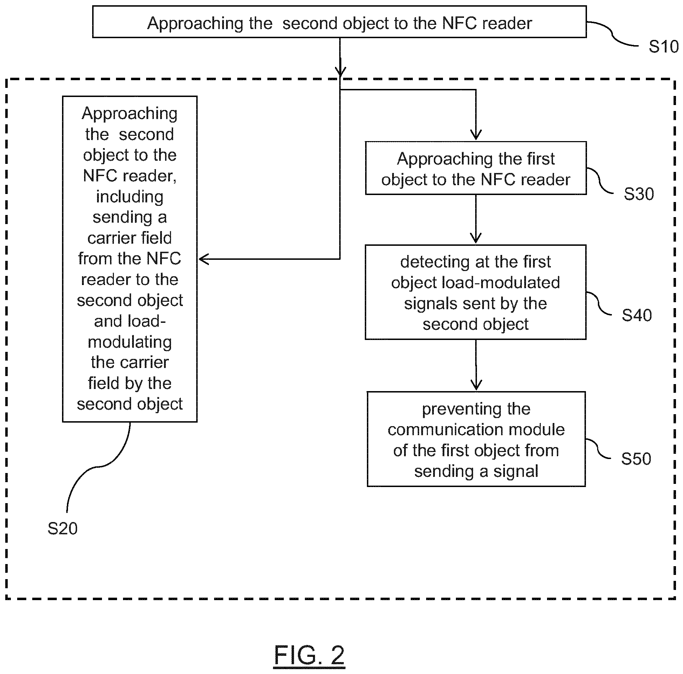

FIG. 2 shows a flowchart of an example of a method illustrating such advantage.

The method involves a system comprising a first object that is the electronic device or a mobile communication system comprising the electronic device, a second object that comprises an RFID tag or a passive NFC tag emulator, thus performing NFC with an NFC reader through load-modulation of a carrier field sent by the NFC reader, and such an NFC reader.

The method comprises approaching (S10) the second object to the NFC reader. In other words, the second object is put into the operating volume of the NFC reader, i.e. at a distance where NFC is achievable. Then, the method comprises performing (S20) NFC between the NFC reader and the second object. As stated above, such NFC includes sending a carrier field from the NFC reader to the second object and load-modulating the carrier field by the second object and thus sending by the second object load-modulated signals addressed to the NFC reader.

While NFC is being performed between the second object and the NFC reader, the method comprises approaching (S30) the first object to the NFC reader. Because the first object comprises a detector as described above, the method comprises detecting (S40) at the first object the load-modulated signals sent by the second object and addressed to the NFC reader. Thus, the method prevents (S50) the communication module of the first object from sending any signal.

Unlike today's unreliable methods that try to solve the passive mode tag anti-collision problem in a software manner (e.g. using an anti-collision protocol for the tag-to-reader communication), the electronic device solves the problem in a hardware manner. According to the method described above, there is no need to a particular anti-collision protocol during the tag-to-reader communication. It is sufficient to add a small anti-collision circuit (i.e. the detector) in the electronic device (e.g. the tag chip). This anti-collision circuit guarantees that the electronic device never responds to any NFC reader which is already in communication with another electronic device. This avoids the "tag starvation", identification delays, and reliability issues of today's tag anti-collision protocol solutions. Thus, this achieves a completely new methodology for tag collision avoidance in the passive communication mode (that may be applicable for tag collision avoidance in the active mode as well, as described later). The explained technique is simple (in terms of implementation), and it has the many advantages over the existing ones already cited above and further cited below.

The idea exposed above can be extended to the example described now. In the following explanations, it is consider that the detector is adapted to detect any modulated signals among received signals, including load-modulated signals, and to prevent the communication module from sending a signal when the detector performs a detection (notably when the detector detects a load-modulated signal). Thus, the detector is further adapted to detect amplitude-modulated signals among received signals and to prevent the electronic device from sending a signal when the detector detects an amplitude-modulated signal.

In this example, the idea is that the electronic device, when in the NFC reader's operating volume, should never respond to the reader as long as the magnetic field is modulated. This is ensured by the detection circuit (i.e. the detector) added to the electronic device. The function of the detection circuit is here simply to detect if the reader's magnetic field is modulated or not.

If a modulated field is detected by the detector, this means that the reader is transmitting data to another nearby tag (amplitude-modulated signals emanating from the NFC reader). In this case the electronic device is advantageously prevented from responding. Or, that can also mean that another nearby tag is responding (by load-modulating a carrier field or, in the case of active communication mode, by generating its own amplitude-modulated field) to the NFC reader. In this case the electronic device is again advantageously prevented from responding. In all cases, if a modulated field is detected by the electronic device, the detector ensures that the electronic device does not respond, which robustly avoids collision.

On the contrary, if no modulated field is detected by the electronic device, this means that the electronic device is among other tags that have already finished their one-by-one communication with the NFC reader. In this case, the electronic device can respond without any risk of collusion. In other words, the detector may be adapted so as to ensure that it prevents the electronic device from sending a signal when a modulated signal is detected, and also so that it ensures that it allows the electronic device to send a signal when no modulated signal is detected.

This example implements a detector in the electronic device that can detect both amplitude-modulated fields and load-modulated NFC reader fields. Accordingly, if no modulated field is detected by the electronic device's detector, the electronic device responds, and vice versa. In this way the detector guarantees the impossibility of having more than one tag responding at the same time. In other words, this guarantees tag collision avoidance whether in the passive or the active modes.

The detector may thus be of sufficient sensitivity and dynamic range to detect modulated signals with a certain modulation index (mi). For any modulated signal oscillating between a lower value $V_{low}$ and an upper value $V_{high}$, the modulation index mi is defined by: $mi = (V_{high} - V_{low})/( V_{high} + V_{low})$ -

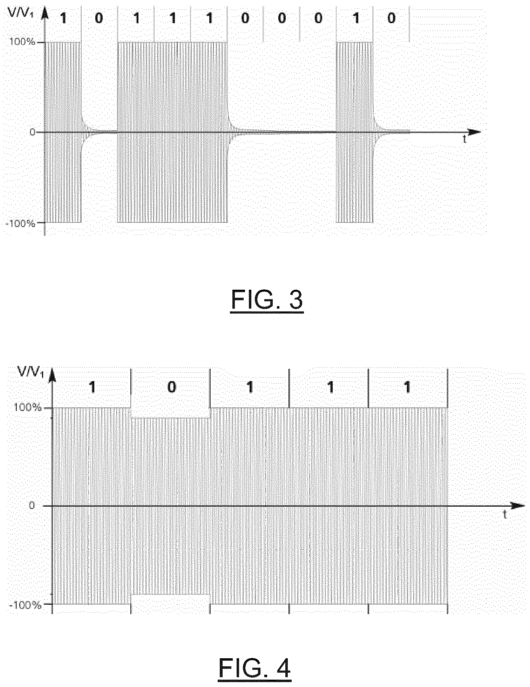

FIGS. 3-6 show different modulated signals that the detector of the example is adapted to detect. On all figures, the carrier $V_1$ of the NFC reader's magnetic field is at 13.56MHz, and is modulated to produce V. The figures show the ratio $V/V_1$, thus the modulation in terms of percentage, as well as a resulting binary encoding with ones and zeros indicated above the curve representing the ratio.

For example, the detector may be adapted to detect modulated signals for the case of the EMVCo Standard (Europay, MasterCard and VISA Contactless Communication for Payment Systems). This may include signals of the type shown on FIG. 3, with mi=100% for Type A communication (called "100% Amplitude Shift Keying"). This may also include signals shown on FIG. 4, with mi=10% for Type B communication (called "10% Amplitude Shift Keying"). These are both amplitude-modulated signals sent by the NFC reader.

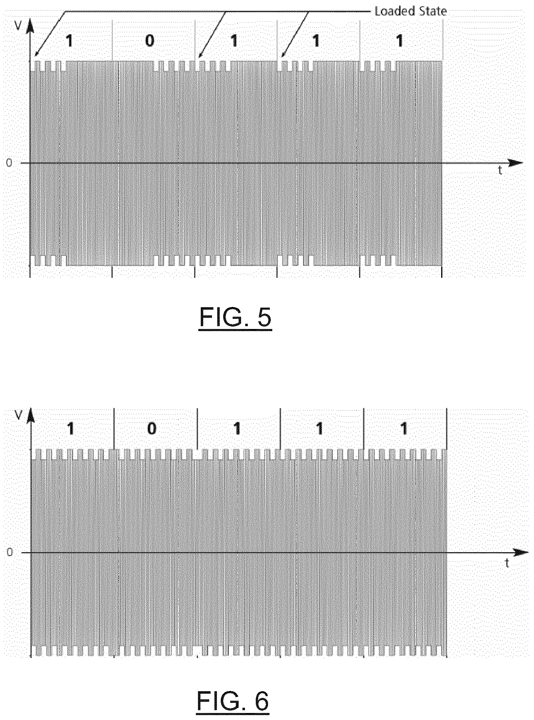

The detector may also be adapted to detect load-modulated signals. These signals look like amplitude-modulated signals, but with a modulation index as small as 1%, and are sent by nearby tags (i.e. tags that are in the operation volume of an NFC reader). They may include "On OFF keying" signals with Manchester coding, as represented on FIG. 5 (which indicates instances of "loaded state" corresponding to periods where load-modulation is actually performed), and/or Binary Phase Shift Keying signal with Non Return to Zero coding, as represented on FIG. 6.

The detector of the example must be of sufficient sensitivity and dynamic range to detect modulated signals with a modulation of amplitude above 1%. With these only design specifications respected during the implementation of the detector, the detector may detect all modulated signals presented on FIGS. 3-6.

It is now referred to FIG. 7 which shows an example of electronic device 70, shown in communication range from NFC reader 90 (as indicated by coupling k on the figure).

Electronic device 70 comprises communication module 72 and detector 74, as described earlier. Communication module 72 comprises converter 76. Converter 76 is adapted to receive and convert (any received) signals (magnetic fields) to a voltage V, thanks to antenna 86. Antenna 86 is also adapted to receive signals sent by NFC reader 90 and to send signals addressed to NFC reader 90, and thus to perform NFC when no detection has occurred. Device 70 is adapted to derive a value V_d from the voltage V provided by converter 76 and detector 74 comprises a binary trigger

78 adapted to perform a comparison of the value V_d derived from the voltage V provided by the converter 76 with at least one threshold V- or V+ and output a true value when the value V_d derived from the voltage provided by the converter is higher than the threshold V+ and a false value when the value derived V_d from the voltage provided by the converter is lower than the threshold V-. Instead of a binary trigger that can output only two values (designated as "true" or "false"), any component adapted to capture variations of the signal is implementable. The derived value V_d varies as the voltage V varies. Thus, by performing comparisons of V_d with a threshold, detector 74 is able to easily capture variations of V_d and thus determine that the signal is being modulated (be it amplitude-modulated or load-modulated). The electronic device 70 is not limited in the exact way to perform the comparison, although a specific example is discussed throughout the following. The electronic device 70 may thus detect modulations in received signals with a simple architecture (simpler than amplitude-modulated signal detector of NFC readers or active tags), as shown on FIG. 7, although electronic device 70 may comprise further circuitry not represented on the figure.

As shown on FIG. 7, detector 74 further comprises AND gate 80 coupled to binary trigger 78 and taking as input a predetermined number of values ("true" or "false") outputted by binary trigger 78. This allows capturing whether there has been a modulation in the received signal during a predetermined period of time corresponding to the predetermined number of values. Of course, gates more complicated than an AND gate may also be implemented, for example gates adapted to output "false" only when a certain number of "false" values are inputted (and not just one).

In the example, communication module 72 comprises a switch 82 having an open and a closed state. The communication module 72 is able to send signals only when switch 82 is in the closed state (the communication module 72 being deactivated, as discussed earlier, when switch 82 is in the open state). The switch 82 is in the closed state when the AND gate 80 outputs a true value (i.e. all the values inputted in the AND gate are "true") and in the open state when the AND gate outputs a false value (i.e. at least one value inputted in the AND gate is "false"). The switch allows a simple deactivation of the communication module. But of course, other ways of deactivating the communication module may be implemented.

As is the case in the example of FIG. 7, binary trigger 78 may be a Schmitt trigger. Thus, binary trigger 78 has a lower threshold V- and an upper threshold V+. In this case, binary trigger 78 switches from true to false if, and only if, derived value V_d goes under V-, and switches from false to true, if, and only if, derived value V_d goes above V+. As known *per se* for Schmitt triggers, V- is strictly inferior to V+. This allows an attenuation of the sensitivity of the detection. Indeed, in the case the electronic device is not "in competition" with other tags, and that no collision is therefore going to occur, there might still be small fluctuations of V_d, because for example other tags are performing NFC with another NFC reader nearby. In such a case, the detector of the example allows not to detect "false positives", and thus to perform more robust and adequate detection.

Typically, as standardized in today's tags, electronic device 70 comprises a regulator 84 for regulating the voltage V provided by the converter. The regulator 84 typically rectifies the voltage V induced by antenna 86 when exposed to a magnetic field, and then attenuates it by applying a gain. The standardized versions of such a regulator perform a looping process on the received voltage to determine the above rectification and/or attenuation parameters so that the outputted voltage V_rec has a value V_rec equal to 2.3V when a non-modulated field is presented to antenna 84. This is notably because V_rec = 2.3V is sufficient to power ON the tag's CMOS40 RF circuit, and because V_rec = 2.3V is a safe value. However, of course, the electronic device presented here is not limited to such a specific value.

When the antenna is exposed to a modulated field, according to the parameters found during the looping process, V_rec oscillates between V_rec_low and V_rec_high. Thus, a robust way to detect modulated signals, including load-modulated signals with mi =1%, is to have the lower threshold V- of the Schmitt trigger 78 correspond to a regulated voltage threshold superior to 2.24V and/or inferior to 2.26V, and/or to have the upper threshold V+ of the Schmitt trigger correspond to a regulated voltage threshold superior to 2.29V and/or inferior to 2.31V. In other words, the thresholds V- and V+ of the Schmitt trigger are chosen so that, when V_d is compared to them, it is simulated that V_rec is compared to two corresponding thresholds, the one corresponding to V- being superior to 2.24V and/or inferior to 2.26V, for example equal to 2.25V, and/or the one corresponding to V+ being superior to 2.29V and/or inferior to 2.31V, for example equal to 2.3V.

The lower threshold V- and/or the upper threshold V+ may be provided at least by performing a low-dropout regulation to the regulated voltage V_rec (and possibly other operations). The low-dropout regulation, performed by an LDO, allows the smoothing of V_rec, which may then be conveniently used to draw V- and/or V+, which is of particular interest when the electronic device does not have any power supply unit.

Further non-limiting details concerning electronic device 84 of FIG. 7 are now discussed.

NFC reader's antenna 92 is de-Q'ed (reducing the quality factor Q) with series resistors (RQr), and matched to NFC reader's transmitter (TX) pins (called also antenna deriver and power amplifier) via a 3-capacitor matching circuit (Clr and C2r). The reader's TX represents a low-impedance (voltage) drive to the TX pins, and it also replicates the TX current waveform into the Reader receiver (RX) for detecting load modulation. Regulator 84 is used to generate a DC signal (V_rec) out of the voltage induced by the NFC reader's magnetic field across tag's antenna 84.

On the figure, tag 70 is considered to be in the operating volume of NFC Reader 90 only if V_rec is greater than or equal to 2.3V. It is thus considered here that V is regulated to 2.3V (the looping process determines parameters such that V_rec = 2.3V when there is no modulation). The value is 2.3V at V_rec because it is the voltage usually required to power up the tag circuit in the passive mode.

The resistive voltage divisions represented on the figure are chosen:

$$- V- = 1.11 \times D1 = 0.75V \qquad (1)$$

Where 1.11V is the band-gap voltage, V- is the low threshold of the Schmitt trigger, and D1= R4/(R3+R4).

(1)=>D1=0.67

$$- V+ = 1.11 \times D2 = 0.76V \qquad (2)$$

Where 1.11V is the band-gap voltage, V+ is the high threshold of the Schmitt trigger, and D2= R2/(R1+R2).
(2) => D2 = 0.68

- On the other hand,

$$V\_d = V\_rec \times D3$$

Where D3 = R6/(R5+R6)
But we need to satisfy the following:

$$V\_rec = 2.3V => V\_d = 0.76V \qquad (3)$$

2.3V and 0.76V are the values of V_rec and V_d above which we always have "1" (or "true") at the Schmitt trigger output.

(3) => D3 = 3

According to the above values of the divisions D1, D2, and D3, the values of the resistances R1, R2, R3, R4, R5, and R6 (represented on FIG. 7) are calculated as known *per se*.

The Schmitt trigger 78 compares V_d with V+ and V-. If V_d > V+, then the output of the Schmitt trigger is "1" (or "true"). If V_d < V-, then the output of the Schmitt trigger is "0" (or "false"). At the output of the Schmitt trigger 78, the lastly received N bits are multiplied in the AND gate 80. N is the length of the shift-register. N may be equal or greater than the maximum number of consecutive identical bits ("1"s or "0"s) in Type A, Type B, and load-modulation signals (the detailed way to determine N not being the purpose of the present explanations). For the design of the example, N = 24. The shift-register may be clocked at 106kHz. For this purpose, the electronic device 70 includes a 106kHz clock, that is available in all tags for normal operations. The generation of this clock is not shown on the figure.

The output of the AND gate 80 switches ON and OFF switch 82 that enables or disables communication module 72 and thus tag 70 to perform NFC with NFC reader 90. If the AND gate 80 output is "1", then switch 82 is closed (i.e. tag 70 is enabled). If the AND gate output is "0", then switch 82 is open (i.e. tag 70 is disabled).

After the above block level description, functionalities are now described.

If the NFC reader 90's field is non-modulated, then V_rec > 2.25V, as V_rec equals 2.3 V in theory but can slightly vary without it meaning that there is load-modulation, as explained earlier. This corresponds to V_d > 0.75V, which implies that the output of the Schmit trigger 78 is always "1", and as a consequence that the output of the AND gate 80 is always "1", that switch 82 is always closed, and that tag 70 is enabled and allowed to respond to reader 90.

If however the NFC reader 90's field is modulated, for example with the extreme case of a mi = 1% modulation, then, in this case, V_rec jumps between two amplitudes V_rec_min and V_rec_max such that:

$$V\_rec\_min < 2.25V \text{ (i.e. } V\_d < 0.75V) \qquad (4)$$

$$V\_rec\_max > 2.3V \text{ (i.e. } V\_d > 0.76V) \qquad\qquad (5)$$

From where the value of V_rec_min comes from the modulation index defined by the following equation:

$$mi = (V\_rec\_max - V\_rec\_min)/(V\_rec\_max + V\_rec\_min) \qquad (6)$$

If V_rec_max = 2.3V and mi = 1%, (6), then V_rec_min = 2.25V Now, the above values are chosen from the following set of equations:

$$V\_rec\_min = Vlow + 6\ Nrms$$

$$V\_rec\_max = Vhigh - 6\ Nrms$$

$$V- = (1.11/2.3)(V\_rec\_min)$$

$$V+ = (1.11/2.3)(V\_rec\_max)$$

Where Nrms is the rms value of noise at the node V_rec. Indeed, knowing that the noise is Gaussian at V_rec, then by choosing 6 Nrms we guarantee that the probability of having a false detection (due to noise) is negligible (probability of false detection $\approx 10^{-10}$).

Referring back to equation (4) and (5), equations (4) and (5) mean that the output of the Schmitt trigger 78 is a pattern of "0"s and "1"s. Thus, the output of the AND gate 80 is always "0" and the switch 82 is always open. As a consequence, tag 70 is disabled and prevented to respond to reader 90.

Thus, the specific design of electronic device 70 of FIG 7 and together with the values presented above ensures that the electronic device is prevented from performing NFC when it is in the presence of other devices performing NFC, and is authorized to perform NFC when it is not in the presence of other devices performing NFC.

**Claims**

1. An electronic device (49, 70) comprising:

   - a communication module (72) adapted to receive signals sent by a near field communication NFC reader (90) and adapted to send signals addressed to the NFC reader,

   **characterized in that** the electronic device comprises:

   - a detector (74) coupled to the communication module and adapted to detect load-modulated signals sent by nearby tags among received signals, and to prevent the communication module from sending a signal when the detector detects a load-modulated signal.

2. The device of claim 1, wherein the communication module (72) comprises a converter (76) adapted to receive and convert signals to a voltage (V), and the device is adapted to derive a value (V_d) from the voltage (V) provided by the converter and comprises a binary trigger (78) adapted to perform a comparison of the value (V_d) derived from the voltage provided by the converter with at least one threshold (V-, V+) and output a true value when the value (V_d) derived from the voltage provided by the converter is higher than the threshold (V+) and a false value when the value derived from the voltage (V_d) provided by the converter is lower than the threshold (V-).

3. The device of claim 2, wherein the detector further comprises an AND gate (80) coupled to the binary trigger (78) and taking as input a predetermined number of values outputted by the binary trigger.

4. The device of claim 3, wherein the communication module (72) comprises a switch (82) having an open and a closed state, the communication module being able to send signals only when the switch is in the closed state, the switch being in the closed state when the AND gate (80) outputs a true value and in the open state when the AND gate outputs a false value.

5. The device of any of claims 2 to 4, wherein the binary trigger (78) is a Schmitt trigger having a lower threshold (V-) and an upper threshold (V+).

6. The device of claim 5, wherein the device comprises a regulator (84) for regulating the voltage provided by the converter, and wherein the lower threshold of the Schmitt trigger (78) corresponds to a regulated voltage threshold superior to 2.24V and/or inferior to 2.26V, and/or the upper threshold of the Schmitt trigger corresponds to a regulated voltage threshold superior to 2.29V and/or inferior to 2.31V.

7. The device of claim 5 or 6, wherein the lower threshold (V-) and/or the upper threshold (V+) are provided at least by performing a low-dropout regulation to the regulated voltage (V_rec).

8. The device of any of claims 1-7, wherein the device is an RFID tag or a passive NFC tag emulator.

9. A mobile communication system (30) comprising the device of any of claims 1-8.

10. A system comprising a first object that is the device of any of claims 1-8 or the mobile communication system of claim 9, a second object that comprises an RFID tag or a passive NFC tag emulator, and an NFC reader.

11. A method for using the system of claim 10, comprising:

• the step of approaching (S10) the second object to the NFC reader, and
• while performing (S20) near field communication NFC between the NFC reader and the second object, including sending a carrier field from the NFC reader to the second object and load-modulating the carrier field by the second object, the steps of:

o approaching (S30) the first object to the NFC reader,
o detecting (S40) at the first object load-modulated signals sent by the second object, and
o preventing (S50) the communication module of the first object from sending a signal.

**Patentansprüche**

1. Elektronische Vorrichtung (49, 70), die umfasst:

- ein Kommunikationsmodul (72), das ausgebildet ist zum Empfangen von Signalen, die durch einen Nahfeldkommunikation (Near Field Communication bzw. NFC)-Leser (90) gesendet werden, und ausgebildet ist zum Senden von an den NFC-Leser adressierten Signalen,

**dadurch gekennzeichnet, dass** die elektronische Vorrichtung umfasst:

- einen Detektor (74), der mit dem Kommunikationsmodul gekoppelt ist und ausgebildet ist zum Erfassen von lastmodulierten Signalen, die durch nahe Tags innerhalb der empfangenen Signale gesendet werden, und zum Verhindern, dass das Kommunikationsmodul ein Signal sendet, wenn der Detektor ein lastmoduliertes Signal erfasst.

2. Vorrichtung nach Anspruch 1, wobei das Kommunikationsmodul (72) einen Wandler (76) umfasst, der ausgebildet ist zum Empfangen und Wandeln von Signalen zu einer Spannung (V), und wobei die Vorrichtung ausgebildet ist zum Ableiten eines Werts (V_d) von der durch den Wandler vorgesehenen Spannung (V) und einen binären Trigger (78) umfasst, der ausgebildet ist zum Durchführen eines Vergleichs des Werts (V_d), der von der durch den Wandler vorgesehenen Spannung abgeleitet wird, mit wenigstens einem Schwellwert (V-, V+) und zum Ausgeben eines True-Werts, wenn der Wert (V_d), der von der durch den Wandler vorgesehenen Spannung abgeleitet wird, höher als der Schwellwert (V+) ist, und eines False-Werts, wenn der Wert (V_d), der von der durch den Wandler vorgesehenen Spannung abgeleitet wird, niedriger als der Schwellwert (V-) ist.

3. Vorrichtung nach Anspruch 2, wobei der Detektor weiterhin ein UND-Gatter (80) umfasst, das mit dem binären Trigger (78) gekoppelt ist und als eine Eingabe eine vorbestimmte Anzahl von durch den binären Trigger ausgegebenen Werten nimmt.

4. Vorrichtung nach Anspruch 3, wobei das Kommunikationsmodul (72) einen Schalter (82) umfasst, der einen offenen und einen geschlossenen Zustand aufweist, wobei das Kommunikationsmodul nur dann zum Senden von Signalen befähigt ist, wenn sich der Schalter in dem geschlossenen Zustand befindet, wobei sich der Schalter in dem geschlossenen Zustand befindet, wenn das UND-Gatter (80) einen True-Wert ausgibt, und sich in dem offenen Zustand befindet, wenn das UND-Gatter einen False-Wert ausgibt.

5. Vorrichtung nach einem der Ansprüche 2 bis 4, wobei der binäre Trigger (78) ein Schmitt-Trigger mit einem unteren Schwellwert (V-) und einem oberen Schwellwert (V+) ist.

6. Vorrichtung nach Anspruch 5, wobei die Vorrichtung einen Regler (84) zum Regeln der durch den Wandler vorgesehenen Spannung umfasst und wobei der untere Schwellwert des Schmitt-Triggers (78) einem geregelten Schwellwert oberhalb von 2,24V und/oder unterhalb von 2,26V entspricht und/oder wobei der obere Schwellwert des Schmitt-Triggers einem geregelten Schwellwert oberhalb von 2,29V und/oder unterhalb von 2,31V entspricht.

7. Vorrichtung nach Anspruch 5 oder 6, wobei der untere Schwellwert (V-) und/oder der obere Schwellwert (V+) wenigstens vorgesehen werden, indem eine Low-Dropout-Regelung auf der geregelten Spannung (V_rec) durchgeführt wird.

8. Vorrichtung nach einem der Ansprüche 1-7, wobei die Vorrichtung ein RFID-Tag oder ein passiver NFC-Tag-Emulator ist.

9. Mobiles Kommunikationssystem (30), das die Vorrichtung eines der Ansprüche 1-8 umfasst.

10. System, das ein erstes Objekt, das die Vorrichtung eines der Ansprüche 1-8 oder das mobile Kommunikationssystem von Anspruch 9 ist, ein zweites Objekt, das einen RFID-Tag oder einen passiven NFC-Tag-Emulator enthält, und einen NFC-Leser umfasst.

11. Verfahren zum Verwenden des Systems von Anspruch 10, umfassend:

• einen Schritt zum Annähern (S10) des zweiten Objekts an den NFC-Leser, und
• während des Durchführens (S20) einer Nahfeldkommunikation (Near Field Communication bzw. NFC) zwischen dem NFC-Leser und dem zweiten Objekt einschließlich des Sendens eines Trägerfelds von dem NFC-Leser an das zweite Objekt und des Lastmodulierens des Trägerfelds durch das zweite Objekt, folgende Schritte:

o Annähern (S30) des ersten Objekts an den NFC-Leser,
o Erfassen (S40), an dem ersten Objekt, von lastmodulierten Signalen, die durch das zweite Objekt gesendet werden, und
o Verhindern (S50), dass das Kommunikationsmodul des ersten Objekts ein Signal sendet.

**Revendications**

1. Dispositif électronique (49, 70) comprenant :

- un module de communication (72) adapté pour recevoir des signaux envoyés par un lecteur de communication en champ proche NFC (90) et adapté pour envoyer des signaux adressés au lecteur NFC,

**caractérisé en ce que** le dispositif électronique comprend :

- un détecteur (74) couplé au module de communication et adapté pour détecter des signaux à modulation de charge envoyés par des étiquettes proches parmi des signaux reçus, et pour empêcher le module de communication d'envoyer un signal lorsque le détecteur détecte un signal à modulation de charge.

2. Dispositif selon la revendication 1, dans lequel le module de communication (72) comprend un convertisseur (76) adapté pour recevoir et convertir des signaux à une tension (V), et le dispositif est adapté pour déduire une valeur (V_d) de la tension (V) fournie par le convertisseur et comprend un déclencheur binaire (78) adapté pour effectuer une comparaison de la valeur (V_d) déduite de la tension fournie par le convertisseur avec au moins un seuil (V-, V+) et émettre une valeur Vrai lorsque la valeur (V_d) déduite de la tension fournie par le convertisseur est supérieure au seuil (V+) et une valeur Faux lorsque la valeur (V_d) déduite de la tension fournie par le convertisseur est inférieure au seuil (V-).

3. Dispositif selon la revendication 2, dans lequel le détecteur comprend en outre une porte ET (80) couplée au déclencheur binaire (78) et prenant comme entrée un nombre prédéterminé de valeurs émises par le déclencheur binaire.

4. Dispositif selon la revendication 3, dans lequel le module de communication (72) comprend un interrupteur (82) ayant un état ouvert et un état fermé, le module de communication ne pouvant envoyer des signaux que lorsque l'interrupteur est à l'état fermé, l'interrupteur étant à l'état fermé lorsque la porte ET (80) émet une valeur Vrai et à l'état ouvert lorsque la porte ET émet une valeur Faux.

5. Dispositif selon l'une quelconque des revendications 2 à 4, dans lequel le déclencheur binaire (78) est un déclencheur de Schmitt ayant un seuil inférieur (V-) et un seuil supérieur (V+).

6. Dispositif selon la revendication 5, dans lequel le dispositif comprend un régulateur (84) pour réguler la tension fournie par le convertisseur, et dans lequel le seuil inférieur du déclencheur de Schmitt (78) correspond à un seuil de tension régulée supérieur à 2,24 V et/ou inférieur à 2,26 V, et/ou le seuil supérieur du déclencheur de Schmitt correspond à un seuil de tension régulée supérieur à 2,29 V et/ou inférieur à 2,31 V.

7. Dispositif selon la revendication 5 ou 6, dans lequel le seuil inférieur (V-) et/ou le seuil supérieur (V+) sont fournis au moins par exécution d'une régulation à faible perte de signal de la tension régulée (V_rec).

8. Dispositif selon l'une quelconque des revendications 1 à 7, dans lequel le dispositif est une étiquette RFID ou un émulateur d'étiquette NFC passive.

9. Système de communication mobile (30) comprenant le dispositif selon l'une quelconque des revendications 1 à 8.

10. Système comprenant un premier objet qui est le dispositif selon l'une quelconque des revendications 1 à 8 ou le système de communication mobile selon la revendication 9, un deuxième objet qui comprend une étiquette RFID ou un émulateur d'étiquette NFC passive, et un lecteur NFC.

11. Procédé d'utilisation du système selon la revendication 10, comprenant :

- l'étape consistant à approcher (S10) le deuxième objet du lecteur NFC, et
- tout en exécutant (S20) une communication en champ proche NFC entre le lecteur NFC et le deuxième objet, incluant l'envoi d'un champ porteur par le lecteur NFC au deuxième objet et la modulation de charge du champ porteur par le deuxième objet, les étapes consistant à :

- approcher (S30) le premier objet du lecteur NFC,
- détecter (S40) au niveau du premier objet des signaux à modulation de charge envoyés par le deuxième objet, et
- empêcher (S50) le module de communication du premier objet d'envoyer un signal.

FIG. 1

Approaching the second object to the NFC reader — S10

Approaching the second object to the NFC reader, including sending a carrier field from the NFC reader to the second object and load-modulating the carrier field by the second object

S20

Approaching the first object to the NFC reader — S30

detecting at the first object load-modulated signals sent by the second object — S40

preventing the communication module of the first object from sending a signal — S50

FIG. 2

FIG. 3

FIG. 4

FIG. 5

FIG. 6

FIG.7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010013604 A1
- WO 2010108022 A1